# EUROPÄISCHE PATENTSCHRIFT

(11) **EP 4 463 295 B1**
(45) Veröffentlichungstag und Bekanntmachung des Hinweises auf die Patenterteilung: **17.12.2025**
(21) Anmeldenummer: 23700651.5
(22) Anmeldetag: 10.01.2023
(51) Int. Cl.: B25J 17/02, B25J 19/00, B05B 13/04

(54) **ROBOTERHAND MIT INTERNER LEITUNGSFÜHRUNG, INSBESONDERE ZUM TRAGEN EINER APPLIKATIONSVORRICHTUNG**
ROBOT HAND WITH INTERNAL CABLE GUIDE, IN PARTICULAR FOR CARRYING AN APPLICATION DEVICE
MAIN DE ROBOT AVEC GUIDE DE CÂBLE INTERNE, EN PARTICULIER POUR PORTER UN DISPOSITIF D'APPLICATION

(30) Priorität: 12.01.2022 DE 102022100608
(43) Veröffentlichungstag der Anmeldung: 20.11.2024
(73) Patentinhaber: Dürr Systems AG, 74321 Bietigheim-Bissingen (DE)
(72) Erfinder: SCHWEIGLER, Sven, 74321 Bietigheim-Bissingen (DE); KLEINHANS, Tobias, 71726 Benningen (DE); HESS, Arved, 78464 Konstanz (DE)
(74) Vertreter: v. Bezold & Partner Patentanwälte - PartG mbB
(86) Internationale Anmeldenummer: PCT/EP2023/050393
(87) Internationale Veröffentlichungsnummer: WO 2023/135111

(56) Entgegenhaltungen:
- EP-A1- 1 632 320
- EP-B1- 1 170 097
- WO-A1-2011/003451
- WO-A1-2020/209204
- US-A1- 2019 337 004
- US-B2- 8 677 854

## Beschreibung

Die Erfindung betrifft eine Roboterhand, insbesondere zum Tragen einer Applikationsvorrichtung und vorzugsweise zur Montage an einen Applikationsroboter. Die Applikationsvorrichtung und/oder der Applikationsroboter dient vorzugsweise zum Lackieren von Kraftfahrzeugkarosseriebauteilen.

Robotergeführte Zerstäuber (z. B. Rotationszerstäuber) zum Lackieren von Kraftfahrzeugkarosseriebauteilen werden zur genauen Bahnführung üblicherweise an einem als Roboterhand oder Roboterhandachse bezeichneten Aktuator mit einem oder mehreren teilweise miteinander gekoppelten Gelenken montiert. Ein Beispiel einer derartigen Roboterhand (Roboterhandachse) ist z. B. in der EP 1 632 320 A1 offenbart. Weitere Beispiele von Robotersystemen mit mehreren teilweise miteinander gekoppelten Gelenken und Leitungsdurchführungen im Bereich von Gelenkstrukturen werden in WO 2011/003451 A1 und in US 2019/337004 A1 offenbart.

Antriebsstränge üblicher Roboterhände für Zerstäuber umfassen meist Zahnräder, Wellen und Lager. Dadurch wird die Genauigkeit erreicht, die beim Lackieren mit Zerstäubern erforderlich ist.

Zerstäuber haben jedoch den Nachteil eines beschränkten Auftragswirkungsgrades, weil sich üblicherweise nur ein Teil des applizierten Lacks auf den zu beschichtenden Bauteilen ablagert, während der Rest des applizierten Lacks als sogenanntes Overspray entsorgt werden muss.

Eine neuere Entwicklungslinie sieht dagegen als Applikationsgerät sogenannte Druckköpfe vor, wie sie beispielsweise aus DE 10 2013 002 412 A1 und DE 10 2010 019 612 A1 bekannt sind. Derartige Druckköpfe geben im Gegensatz zu den bekannten Zerstäubern keinen Sprühnebel des zu applizierenden Lacks ab, sodass im Wesentlichen auch kein unerwünschtes Overspray entsteht.

Der eingangs erläuterte Aufbau der Antriebsstränge aus Zahnrädern, Wellen und Lagern erreicht nicht die Genauigkeit, die beim Lackieren mit insbesondere Druckköpfen gewünscht wird.

Ungenauigkeiten entstehen z. B. durch spielbehaftete Verzahnungen sowie Elastizitäten von Bauteilen, z. B. Zahnrädern und Wellen, die sich unter Belastung verformen können. Des Weiteren entstehen durch die oft geforderte kompakte Bauweise Kopplungen zwischen den Antriebssträngen der einzelnen Gelenke, wodurch wiederum das mechanische Spiel erhöht und die Steifigkeit verringert wird. Außerdem ist dadurch die Berechenbarkeit notwendiger Antriebsmomente für eine hochpräzise Bewegung des TCP (Tool Center Point) erschwert und/oder verliert an Genauigkeit.

Die Vielzahl der zu parametrierenden Einflussgrößen (z. B. Reibparameter, statische und dynamische Parameter etc.) erfordert zu ihrer wertemäßigen Bestimmung aufwendige Versuche und/oder die Verwendung von Algorithmen zur Schätzung. Beides führt zu Ungenauigkeiten in der Berechnung, damit zu einer fehlerbehafteten Momentenvorsteuerung und damit zu Positionierungsungenauigkeiten der Roboterhand.

Eine Aufgabe der Erfindung ist es, eine möglichst präzise und/oder eine möglichst wenig Spiel aufweisende Roboterhand zur Verfügung zu stellen, vorzugsweise eine Roboterhand zum Tragen einer Applikationsvorrichtung, die insbesondere eine Druckkopfeinrichtung umfassen kann.

Die Aufgabe kann durch die Merkmale des unabhängigen Anspruchs gelöst werden. Vorteilhafte Weiterbildungen der Erfindung sind in den Unteransprüchen offenbart oder ergeben sich aus der folgenden Beschreibung bevorzugter Ausführungsbeispiele der Erfindung.

Die Erfindung betrifft eine Roboterhand (z. B. eine Roboterhandachse), vorzugsweise zum Tragen einer Applikationsvorrichtung und/oder z. B. zur Montage an einen Applikationsroboter. Die Applikationsvorrichtung kann z. B. eine Druckkopfeinrichtung umfassen.

Die Roboterhand umfasst eine erste Gelenkstruktur, die um eine erste Achse drehbar ist, eine zweite Gelenkstruktur, die um eine zweite Achse drehbar ist, und eine dritte Gelenkstruktur, die um eine dritte Achse drehbar ist.

Die Roboterhand umfasst eine Leitungsdurchführung, die sich (z. B. axial) durch die erste Gelenkstruktur und (z. B. axial) durch die dritte Gelenkstruktur erstreckt. Die Leitungsdurchführung kann z. B. in der ersten Gelenkstruktur und/oder in der dritten Gelenkstruktur zweckmäßig einen Durchlassquerschnitt von vorzugsweise mindestens 40mm bis maximal 90mm aufweisen, vorzugsweise von z. B. 70mm +/- 5mm.

Es ist möglich, dass in der Leitungsdurchführung zumindest eine Leitung verläuft, z. B. zumindest ein Schlauch (z. B. Medienschlauch) und/oder zumindest ein Kabel (z. B. ein Steuerkabel (z. B. ein Datenkabel) und/oder ein Kabel zur vorzugsweise elektrischen Energieversorgung).

Die Roboterhand kann z. B. eine Applikationsvorrichtung aufweisen, die vorzugsweise durch die Roboterhand getragen werden kann.

Die Applikationsvorrichtung kann z. B. eine Druckkopfeinrichtung umfassen, insbesondere mit einer Vielzahl an Düsen zum Ausgeben eines Applikationsmittels, beispielsweise zum Beschichten (z. B. Lackieren) von Kraftfahrzeugkarosseriebauteilen.

Die Druckkopfeinrichtung dient insbesondere zum im Wesentlichen Overspray-freien Beschichten der Kraftfahrzeugkarosseriebauteile.

Die zumindest eine Leitung kann vorzugsweise zumindest eine Medienleitung (z. B. einen Medienschlauch) umfassen, zur Applikationsmittel-Versorgung (z. B. Lack-Versorgung) und/oder zur Fluid-Versorgung (z. B. Luft-Versorgung, Druckluft-Versorgung und/oder Spülmittel-Versorgung) der Applikationsvorrichtung und/oder der Druckkopfeinrichtung. Alternativ oder ergänzend kann die zumindest eine Leitung zumindest ein Kabel umfassen, zur z. B. elektrischen Energieversorgung und/oder zur Steuerung der Applikationsvorrichtung und/oder der Druckkopfeinrichtung.

Auch kann die zumindest eine Leitung z. B. zumindest eine Medienrückführleitung (z. B. einen Medienschlauch) zur Rückführung eines Fluids (z. B. Applikationsmittel (z. B. Lack), Luft, Druckluft und/oder Spülmittel) aus der Applikationsvorrichtung und/oder der Druckkopfeinrichtung umfassen.

Das Applikationsmittel ist vorzugsweise ein Lack (z. B. Wasserlack, lösemittelbasierter Lack, Basislack und/oder Klarlack).

Das Applikationsmittel kann aber auch z. B. ein Wachs (z.B. Konservierungswachs), ein Dickstoff, ein Dichtstoff, ein Dämmstoff oder ein Klebstoff umfassen.

Die Roboterhand umfasst zweckmäßig einen insbesondere festen Versatz (z. B. einen offset) zwischen der ersten Achse und der zweiten Achse, sodass z. B. die erste Achse und die zweite Achse vorzugsweise fix versetzt zueinander angeordnet sind.

Es ist möglich, dass sich die Leitungsdurchführung auch (z. B. axial) durch die zweite Gelenkstruktur erstreckt. Auch die zumindest eine Leitung kann sich vorzugsweise durch die zweite Gelenkstruktur erstrecken.

Es ist möglich, dass die erste Gelenkstruktur ein hohles Zentrum aufweist, durch das sich die Leitungsdurchführung erstreckt, und/oder die dritte Gelenkstruktur ein hohles Zentrum aufweist, durch das sich die Leitungsdurchführung erstreckt.

Die zweite Gelenkstruktur kann z. B. auch ein hohles Zentrum aufweisen, durch das sich die Leitungsdurchführung vorteilhaft erstrecken kann.

Die erste Achse und die dritte Achse können sich z. B. in einer gemeinsamen Ebene erstrecken, z. B. auch dann, wenn sie um ihre Achsen gedreht werden. Es ist möglich, dass die zweite Achse die gemeinsame Ebene kreuzt, vorzugsweise im Wesentlichen rechtwinklig kreuzt. Dadurch kann vorteilhaft ermöglicht werden, dass wenn sich die Gelenkstrukturen um ihre Achsen drehen, die Leitungsdurchführung /oder die zumindest eine Leitung nicht geknickt, sondern gebogen wird (und z. B. auch tordiert wird).

Es ist möglich, dass die erste Gelenkstruktur eine (z. B. kinematisch) eingangsseitige Gelenkstruktur der Roboterhand ist und/oder die dritte Gelenkstruktur eine (z. B. kinematisch) ausgangsseitige Gelenkstruktur der Roboterhand ist.

Die zweite Gelenkstruktur kann vorzugsweise (z. B. kinematisch) zwischen die erste Gelenkstruktur und die dritte Gelenkstruktur gekoppelt sein.

Es ist möglich, dass die erste Gelenkstruktur ein Getriebe umfasst, vorzugsweise ein Wellgetriebe. Alternativ oder ergänzend kann die zweite Gelenkstruktur ein Getriebe umfassen, vorzugsweise ein Wellgetriebe. Das Wellgetriebe der ersten Gelenkstruktur und/oder der zweiten Gelenkstruktur ist vorzugsweise als untersetzendes Wellgetriebe ausgebildet, um vorteilhaft das erforderliche Drehmoment erzeugen zu können.

Ein Wellgetriebe (z. B. auch bekannt als Spannungswellengetriebe, Gleitkeilgetriebe oder nach der englischen Bezeichnung strain wave gear (SWG)) ist ein Getriebe mit insbesondere einem elastischen Übertragungselement, das sich vorteilhaft durch eine zweckmäßig hohe Über- oder Untersetzung und zweckmäßig hohe Genauigkeit bei insbesondere kleinem Gewicht und insbesondere kleinen Abmessungen auszeichnet.

Ein Getriebe, z. B. Wellgetriebe, im Kontext der Erfindung umfasst insbesondere zumindest eines von folgendem:
- eine im Wesentlichen elliptische Scheibe (z. B. Wave Generator). Die elliptische Scheibe kann z. B. eine zentrische Nabe und/oder ein (zweckmäßig dünnes und/oder elliptisch) verformbares Lager (z. B. Kugel- oder Wälzlager) aufweisen. Die elliptische Scheibe dient vorzugsweise als Antriebselement des Getriebes; und/oder
- eine verformbare zylindrische Büchse mit Außenverzahnung (z. B. Flexspline). Die Büchse dient insbesondere als Abtriebselement des Getriebes; und/oder
- einen (zweckmäßig im Wesentlichen starren) zylindrischen Außenring mit Innenverzahnung (z. B. Circular spline). Der Außenring kann vorzugsweise die elliptische Scheibe und die Büchse umgeben; und/oder
- Die Außenverzahnung der Büchse weist vorzugsweise zumindest einen Zahn weniger auf als die Innenverzahnung des Außenrings.

Es ist möglich, dass die erste Gelenkstruktur einen Antrieb (z. B. Motor, insbesondere Elektromotor) umfasst, um die erste Gelenkstruktur um die erste Achse zu drehen. Der Antrieb der ersten Gelenkstruktur kann z. B. ohne eigenes Gehäuse und/oder ohne eigene Lagerung an die erste Gelenkstruktur gekoppelt sein. Der Antrieb der ersten Gelenkstruktur kann z. B. als Bausatzmotor ausgebildet sein, der vorzugsweise einen Rotor und einen Stator umfasst. Die erste Gelenkstruktur kann insbesondere ein (z. B. ringförmiges) Gehäuse für ihren Antrieb bilden, wobei z. B. das Gehäuse den Antrieb vorzugsweise ringförmig ummanteln kann. Es ist möglich, dass die erste Gelenkstruktur zur Kühlung ihres Antriebs zweckmäßig außenseitig zumindest einen Kühlkörper (z. B. zumindest eine Kühlrippe oder Kühlrinne etc.) aufweist und/oder mit einer Aktivkühlung (z. B. zur Kühlung mittels Luft, insbesondere Druckluft, oder zur Kühlung mittels einer Kühlflüssigkeit) ausgestattet ist.

Es ist möglich, dass die zweite Gelenkstruktur einen Antrieb (z. B. Motor, insbesondere Elektromotor) umfasst, um die zweite Gelenkstruktur um die zweite Achse zu drehen. Der Antrieb der zweiten Gelenkstruktur kann z. B. ohne eigenes Gehäuse und/oder ohne eigene Lagerung an die zweite Gelenkstruktur gekoppelt sein. Der Antrieb der zweiten Gelenkstruktur kann z. B. als Bausatzmotor ausgebildet sein, der vorzugsweise einen Rotor und einen Stator umfasst. Die zweite Gelenkstruktur kann insbesondere ein (z. B. ringförmiges) Gehäuse für ihren Antrieb bilden, wobei z. B. das Gehäuse den Antrieb vorzugsweise ringförmig ummanteln kann. Es ist möglich, dass die zweite Gelenkstruktur zur Kühlung ihres Antriebs zweckmäßig außenseitig zumindest einen Kühlkörper (z. B. zumindest eine Kühlrippe oder Kühlrinne etc.) aufweist und/oder mit einer Aktivkühlung (z. B. zur Kühlung mittels Luft, insbesondere Druckluft, oder zur Kühlung mittels einer Kühlflüssigkeit) ausgestattet ist.

Es ist möglich, dass die dritte Gelenkstruktur einen Antrieb (z. B. Motor, insbesondere Elektromotor) umfasst, um die dritte Gelenkstruktur um die dritte Achse zu drehen. Der Antrieb der dritten Gelenkstruktur kann z. B. ohne eigenes Gehäuse und/oder ohne eigene Lagerung an die dritte Gelenkstruktur gekoppelt sein. Der Antrieb der dritten Gelenkstruktur kann z. B. als Bausatzmotor ausgebildet sein, der vorzugsweise einen Rotor und einen Stator umfasst. Die dritte Gelenkstruktur kann insbesondere ein (z. B. ringförmiges) Gehäuse für ihren Antrieb bilden, wobei z. B. das Gehäuse den Antrieb vorzugsweise ringförmig ummanteln kann. Es ist möglich, dass die dritte Gelenkstruktur zur Kühlung ihres Antriebs zweckmäßig außenseitig zumindest einen Kühlkörper (z. B. zumindest eine Kühlrippe oder Kühlrinne etc.) aufweist und/oder mit einer Aktivkühlung (z. B. zur Kühlung mittels Luft, insbesondere Druckluft, oder zur Kühlung mittels einer Kühlflüssigkeit) ausgestattet ist.

Der Antrieb der dritten Gelenkstruktur kann z. B. einen Direktantrieb umfassen und/oder z. B. getriebelos ausgebildet sein. Der Direktantrieb kann z. B. einen Direkt-Motor oder einen Torque-Motor umfassen. Mit Direktantrieb sind im Kontext der Erfindung z. B. Antriebe umfasst, bei denen das Antriebsteil und das Arbeits- und/oder Abtriebsteil ohne Getriebe zweckmäßig direkt verbunden sind.

Durch den Direktantrieb kann vorteilhaft höchste Präzision ohne Spiel und Hystereseverlust realisiert werden. Als Messeinrichtung zur Drehpositionsmessung der dritten Gelenkstruktur kann z. B. eine abtriebsseitig messende, insbesondere hochauflösende Messeinrichtung genutzt werden.

Es ist möglich, dass sich die Leitungsdurchführung und vorzugsweise die zumindest eine Leitung durch den Antrieb und/oder das Getriebe der ersten Gelenkstruktur erstreckt. Alternativ oder ergänzend kann sich die Leitungsdurchführung und vorzugsweise die zumindest eine Leitung durch den Antrieb der dritten Gelenkstruktur erstrecken.

Es ist möglich, dass der Antrieb der ersten Gelenkstruktur eine Motor-Hohlwelle und/oder eine Getriebe-Hohlwelle umfasst, durch die sich die Leitungsdurchführung und z. B. die zumindest eine Leitung erstreckt.

Es ist möglich, dass der Antrieb der dritten Gelenkstruktur eine Motor-Hohlwelle umfasst, durch die sich die Leitungsdurchführung und z. B. die zumindest eine Leitung erstreckt.

Die Leitungsdurchführung und z. B. die zumindest eine Leitung erstreckt sich aber am Antrieb und/oder am Getriebe der zweiten Gelenkstruktur außen vorbei.

Um die Positionen, insbesondere die Drehpositionen, üblicher Gelenkstrukturen zu kennen, werden im Stand der Technik üblicherweise Geber oder Motor-Feedback-Systeme an Motorwellen genutzt, um damit mittelbar die Positionen der Gelenkstrukturen ermitteln zu können. Nachteilhaft hierbei ist allerdings, dass z. B. aufgrund von Spiel, Verschleiß, Hysterese etc. im Antriebsstrang die dadurch ermittelten Positionen des Abtriebs relativ ungenau sein können.

Eine Messung und/oder Detektion insbesondere direkt an der Gelenkstruktur, z. B. der ersten Gelenkstruktur, der zweiten Gelenkstruktur und/oder der dritten Gelenkstruktur, und somit vorzugsweise am Abtrieb ermöglicht eine vorteilhaft sehr hohe Drehpositions-Erfassungsgenauigkeit.

Um die Positionen, insbesondere die Drehpositionen, einer Gelenkstruktur (z. B. der ersten, der zweiten und/oder der dritten Gelenkstruktur) so präzise wie möglich zu kennen, kann im Kontext der Erfindung (z. B. anstelle von Gebern oder Motor-Feedback-Systemen an Motorwellen) eine Messeinrichtung (z. B. optische Messeinrichtung) verwendet werden, mittels der die Drehpositionen der Gelenkstruktur zweckmäßig an der Gelenkstruktur selbst direkt gemessen werden können, so dass z. B. Verschleiß, Spiel und/oder Hysterese im Antriebsstrang der Roboterhand zu keiner oder keiner wesentlichen Verschlechterung der Positionserfassung führen. Dadurch ist es z. B. möglich, durch Nachregelung einen äußerst steifen Antriebsstrang der Roboterhand zu gewährleisten, der z. B. im Wesentlichen nur noch von der Genauigkeit der Positionserfassung (insbesondere der Auflösung der Messeinrichtung) sowie der Reaktionsschnelligkeit und Regelgüte des Gesamtsystems abhängen kann.

Vorzugsweise kann zur Drehpositionsmessung der ersten Gelenkstruktur, der zweiten Gelenkstruktur und/oder der dritten Gelenkstruktur jeweils z. B. eine abtriebsseitig vom jeweiligen Antrieb messende, insbesondere hochauflösende, Messeinrichtung genutzt werden.

Die Roboterhand kann z. B. eine (insbesondere optische, zweckmäßig hochauflösende) Messeinrichtung zur (vorzugsweise direkten) Drehpositionsmessung der ersten Gelenkstruktur aufweisen. Die Messeinrichtung kann z. B. ausgebildet sein, um zur Drehpositionsmessung die erste Gelenkstruktur zweckmäßig direkt zu detektieren und/oder die erste Gelenkstruktur abtriebsseitig vom Antrieb der ersten Gelenkstruktur zu detektieren, so dass vorteilhaft Verschleiß, Spiel und/oder Hysterese bei der Positionsermittlung unberücksichtigt bleiben.

Es ist möglich, dass die Messeinrichtung zur Drehpositionsmessung der ersten Gelenkstruktur über eine (z. B. im Wesentlichen spielfreie und/oder vorgespannte) Kopplungsstruktur mit der ersten Gelenkstruktur verbunden ist. Die Kopplungsstruktur kann z. B. drehbar sein und/oder miteinander in Eingriff stehende Zähne umfassen. Alternativ oder ergänzend kann die Kopplungsstruktur z. B. achsparallel oder winklig ausgeführt sein und/oder miteinander in Eingriff stehende (z. B. konische) Zahnräder umfassen. Die Kopplungsstruktur kann z. B. eine Zahnradpaarung oder Kegelradstufe umfassen.

Es ist möglich, dass die Roboterhand z. B. eine zusätzliche Messeinrichtung zur (vorzugsweise antriebsseitigen) Drehpositionsmessung der ersten Gelenkstruktur aufweist. Die zusätzliche Messeinrichtung kann z. B. ausgebildet sein, um insbesondere zur Drehpositionsmessung den Antrieb der ersten Gelenkstruktur zweckmäßig direkt zu detektieren. Vorzugsweise kann die Antriebswelle (z. B. die Motor- und Getriebe-Hohlwelle) des Antriebs der ersten Gelenkstruktur insbesondere direkt detektiert werden.

Die Roboterhand kann somit z. B. eine zweckmäßig abtriebsseitige Messeinrichtung und/oder eine zweckmäßig antriebsseitige Messeinrichtung zur Drehpositionsmessung der ersten Gelenkstruktur aufweisen.

Die Roboterhand kann z. B. eine (insbesondere optische, zweckmäßig hochauflösende) Messeinrichtung zur (vorzugsweise direkten) Drehpositionsmessung der zweiten Gelenkstruktur aufweisen. Die Messeinrichtung kann z. B. ausgebildet sein, um zur Drehpositionsmessung die zweite Gelenkstruktur zweckmäßig direkt zu detektieren und/oder die zweite Gelenkstruktur abtriebsseitig vom Antrieb der zweiten Gelenkstruktur zu detektieren, so dass vorteilhaft Verschleiß, Spiel und/oder Hysterese bei der Positionsermittlung unberücksichtigt bleiben.

Es ist möglich, dass die Roboterhand z. B. eine zusätzliche Messeinrichtung zur (vorzugsweise antriebsseitigen) Drehpositionsmessung der zweiten Gelenkstruktur aufweist. Die zusätzliche Messeinrichtung kann z. B. ausgebildet sein, um insbesondere zur Drehpositionsmessung den Antrieb der zweiten Gelenkstruktur zweckmäßig direkt zu detektieren. Vorzugsweise kann der Rotor oder die Antriebswelle (z. B. die Motorwelle) des Antriebs der zweiten Gelenkstruktur insbesondere direkt detektiert werden.

Die Roboterhand kann somit z. B. eine zweckmäßig abtriebsseitige Messeinrichtung und/oder eine zweckmäßig antriebsseitige Messeinrichtung zur Drehpositionsmessung der zweiten Gelenkstruktur aufweisen.

Die Roboterhand kann z. B. eine (insbesondere optische, zweckmäßig hochauflösende) Messeinrichtung zur (vorzugsweise direkten) Drehpositionsmessung der dritten Gelenkstruktur aufweisen. Die Messeinrichtung kann z. B. ausgebildet sein, um zur Drehpositionsmessung die dritte Gelenkstruktur zweckmäßig direkt zu detektieren und/oder die dritte Gelenkstruktur abtriebsseitig vom Antrieb der dritten Gelenkstruktur zu detektieren, so dass vorteilhaft Verschleiß, Spiel und/oder Hysterese bei der Positionsermittlung unberücksichtigt bleiben.

Es ist möglich, dass die Roboterhand z. B. eine zusätzliche Messeinrichtung zur (vorzugsweise antriebsseitigen) Drehpositionsmessung der dritten Gelenkstruktur aufweist. Die zusätzliche Messeinrichtung kann z. B. ausgebildet sein, um insbesondere zur Drehpositionsmessung den Antrieb der dritten Gelenkstruktur zweckmäßig direkt zu detektieren. Vorzugsweise kann die Antriebswelle (z. B. die Motor-Hohlwelle) des Antriebs der dritten Gelenkstruktur insbesondere direkt detektiert werden.

Die Roboterhand kann somit z. B. eine zweckmäßig abtriebsseitige Messeinrichtung und/oder eine zweckmäßig antriebsseitige Messeinrichtung zur Drehpositionsmessung der dritten Gelenkstruktur aufweisen.

Es ist möglich, dass die Messeinrichtung zur Drehpositionsmessung der dritten Gelenkstruktur an der zweiten Gelenkstruktur montiert ist und/oder über eine (z. B. im Wesentlichen spielfreie und/oder vorgespannte) Kopplungsstruktur mit der dritten Gelenkstruktur verbunden ist. Die Kopplungsstruktur kann z. B. drehbar sein und/oder miteinander in Eingriff stehende Zähne umfassen. Alternativ oder ergänzend kann die Kopplungsstruktur z. B. achsparallel oder winklig ausgeführt sein und/oder miteinander in Eingriff stehende (z. B. konische) Zahnräder umfassen. Die Kopplungsstruktur kann z. B. eine Zahnradpaarung oder Kegelradstufe umfassen.

Die Messeinrichtung der ersten Gelenkstruktur, die Messeinrichtung der zweiten Gelenkstruktur und/oder die Messeinrichtung der dritten Gelenkstruktur kann z. B. eine Auflösung mit einer Fehlertoleranz von 10 arcsec, vorzugsweise 5 arcsec, aufweisen und somit insbesondere eine hochauflösende Messeinrichtung darstellen.

Es ist möglich, dass z. B. die zusätzlichen Messeinrichtungen ebenfalls eine Auflösung mit einer Fehlertoleranz von vorzugsweise 10 arcsec, insbesondere 5 arcsec, aufweisen.

Die Roboterhand kann z. B. eine Neutralstellung aufweisen, in der die erste Achse und die dritte Achse im Wesentlichen koaxial ausgerichtet sind.

Es ist möglich, dass die zweite Gelenkstruktur ausgehend von der Neutralstellung zur einen Seite einen Drehbereich von größer 110°, größer 120° oder größer 130° und z. B. von kleiner 150° aufweist, und/oder zur anderen Seiten einen Drehbereich von größer 1°, größer 80° oder größer 90° und z. B. von kleiner 110° aufweist.

Es ist möglich, dass der Versatz zwischen mindestens 10 mm und maximal 100 mm lang ist, z. B. um bei einer Drehung der zweiten Gelenkstruktur um die zweite Achse die zumindest eine Leitung nicht zu knicken, sondern einen angemessenen Biegeradius zu ermöglichen.

Die Roboterhand kann z. B. eine Applikationsvorrichtung umfassen.

Es ist möglich, dass die Roboterhand die Applikationsvorrichtung zweckmäßig mittelbar oder unmittelbar trägt und/oder die Applikationsvorrichtung zweckmäßig mittelbar oder unmittelbar mit der dritten Gelenkstruktur verbunden ist.

Die Applikationsvorrichtung umfasst vorzugsweise eine Druckkopfeinrichtung, insbesondere mit einer Vielzahl an Düsen zum Ausgeben eines Applikationsmittels (z. B. Lack) z. B. auf ein Kraftfahrzeugkarosseriebauteil (z. B. eine Karosserie und/oder ein Anbauteil hierfür). Alternativ kann die Applikationsvorrichtung aber auch einen anderen Applikator umfassen, z. B. einen Rotationszerstäuber, nur eine einzige Ausgabedüse etc.

Es ist möglich, dass die zumindest eine Leitung zumindest eine Medienleitung zur Applikationsmittel-Versorgung, insbesondere Lack-Versorgung der Applikationsvorrichtung und/oder der Drucckopfeinrichtung umfasst. Alternativ oder ergänzend kann die zumindest eine Leitung z. B. zumindest eine Medienrückführleitung zum Rückführen eines Fluids (z. B. Applikationsmittel und/oder Spülmittel) aus der der Applikationsvorrichtung und/oder der Druckkopfeinrichtung umfassen.

Alternativ oder ergänzend kann die zumindest eine Leitung zumindest ein Kabel zur Energieversorgung und/oder zur Steuerung der Applikationsvorrichtung und/oder der Druckkopfeinrichtung umfassen.

Die Roboterhand kann z. B. eine zweckmäßig konische (vorteilhaft wiederholgenaue) Buchsen-Stift-Anordnung zur Masterung und/oder Kalibrierung der Roboterhand aufweisen.

Die Erfindung umfasst auch einen Applikationsroboter, vorzugsweise einen Lackierroboter, mit einer Roboterhand wie hierin offenbart.

Der Applikationsroboter ist vorzugsweise ein mehrachsiger Gelenkarmroboter, mit z. B. zumindest 4, zumindest 5 oder zumindest 6 Bewegungsachsen.

Es ist möglich, dass die dritte Achse eine Drehgeschwindigkeit von über 1000, 2000, 3000, 4000 oder 5000 °/s aufweist und/oder eine Torsionssteifigkeit von über 1000, 2000, 3000, 4000 oder 5000 oder sogar über 10000 Nm/arcmin aufweist.

Die Torsionssteifigkeit kann insbesondere durch eine Nachregelung erzielt werden, insbesondere durch eine Nachregelung des Antriebs der ersten Gelenkstruktur, des Antriebs der zweiten Gelenkstruktur und/oder des Antriebs der dritten Gelenkstruktur. Hierfür kann der Applikationsroboter z. B. eine elektronische Steuereinrichtung aufweisen, mittels der der Antrieb der ersten Gelenkstruktur, der Antrieb der zweiten Gelenkstruktur und/oder der Antrieb der dritten Gelenkstruktur steuerbar und/oder nachregelbar ist.

Zu erwähnen ist, dass die Applikationsvorrichtung, die Druckkopfeinrichtung und/oder der Applikationsroboter insbesondere zum Ausgeben eines Applikationsmittels auf ein Kraftfahrzeugkarosseriebauteil dient.

Das Applikationsmittel ist vorzugsweise Lack.

Die Leitungsdurchführung kann z. B. einen Schlauch (z. B. Schutz- und/oder Führungsschlauch) oder ein (z. B. abschnittsweise flexibles) Rohr (z. B. Schutz- und/oder Führungsrohr) umfassen, in der die zumindest eine Leitung (vorteilhaft geschützt und/oder geführt) verlaufen kann. Der Schlauch oder das Rohr kann vorteilhaft eine Schutzabdeckung und/oder eine Führungsstruktur für die zumindest eine Leitung bilden.

Zu erwähnen ist auch, dass die Leitungsdurchführung und insbesondere die zumindest eine Leitung sich durch einen vorzugsweise im Wesentlichen zylinderförmigen Gelenkkörper der ersten Gelenkstruktur, der zweiten Gelenkstruktur und/oder der dritten Gelenkstruktur erstrecken kann.

Zu erwähnen ist auch, dass die erste Gelenkstruktur, die zweite Gelenkstruktur und die dritte Gelenkstruktur vorzugsweise relativ zueinander drehbar sind.

Die dritte Gelenkstruktur kann z. B. zumindest abschnittsweise in der zweiten Gelenkstruktur untergebracht sein.

Die zumindest eine Leitung kann zweckmäßig eine oder mehrere Leitungen umfassen.

Es ist möglich, dass die erste Gelenkstruktur einen Drehbereich um die erste Achse von über +/-340° aufweisen kann, z. B. von im Wesentlichen +/- 360° oder von zumindest 360°. Alternativ oder ergänzend kann die dritte Gelenkstruktur einen Drehbereich um die dritte Achse von über +/- 360° oder über +/- 700° oder von im Wesentlichen +/- 720° aufweisen.

Im Kontext der Erfindung sind die Antriebsstränge vorzugsweise so direkt wie möglich gestaltet und vorzugsweise nicht miteinander gekoppelt. Sie nutzen in der Verzahnung vorzugsweise spielfreie Wellgetriebe für die erste Gelenkstruktur und/oder die zweite Gelenkstruktur, um zweckmäßig die hierbei notwendigen Abtriebsmomente zu generieren. Die dritte Gelenkstruktur kann aufgrund ihrer oft geringeren Last z. B. ganz auf ein Getriebe verzichten. Hier lässt sich also ein Direktantrieb und/oder Torque-Antrieb realisieren, der vorteilhaft maximale Steifigkeit ohne mechanisches Spiel aufweist.

Die zuvor beschriebenen bevorzugten Ausführungsbeispiele und Merkmale der Erfindung sind miteinander kombinierbar. Vorteilhafte Weiterbildungen der Erfindung sind in den Unteransprüchen offenbart oder ergeben sich aus der nachstehenden Beschreibung bevorzugter Ausführungsbeispiele der Erfindung in Verbindung mit den beigefügten Figuren.
- Figur 1: zeigt eine perspektivische Ansicht einer Roboterhand gemäß einem Ausführungsbeispiel der Erfindung,
- Figur 2: zeigt eine Seitenansicht der Roboterhand,
- Figur 3: zeigt eine andere perspektivische Ansicht der Roboterhand, mit insbesondere schematisch dargestellter Leitungsdurchführung und Leitung,
- Figur 4: zeigt eine perspektivische Ansicht der Roboterhand, insbesondere mit Messeinrichtung zur Messung von Drehpositionen einer zweiten Gelenkstruktur der Roboterhand,
- Figur 5: zeigt eine perspektivische Ansicht der Roboterhand, insbesondere mit Messeinrichtung zur Messung von Drehpositionen einer dritten Gelenkstruktur der Roboterhand,
- Figur 6: zeigt eine perspektivische Ansicht der Roboterhand, insbesondere mit Messeinrichtung zur Messung von Drehpositionen einer ersten Gelenkstruktur der Roboterhand,
- Figur 7: zeig eine schematische Ansicht eines Applikationsroboters mit der Roboterhand, und
- Figur 8: zeigt ein Beispiel eines schematischen Wellgetriebes.

Die unter Bezugnahme auf die Figuren beschriebenen bevorzugten Ausführungsbeispiele der Erfindung stimmen teilweise überein, wobei ähnliche oder identische Teile mit den gleichen Bezugszeichen versehen sind und zu deren Erläuterung auch auf die Beschreibung der anderen Ausführungsbeispiele verwiesen werden kann, um Wiederholungen zu vermeiden.

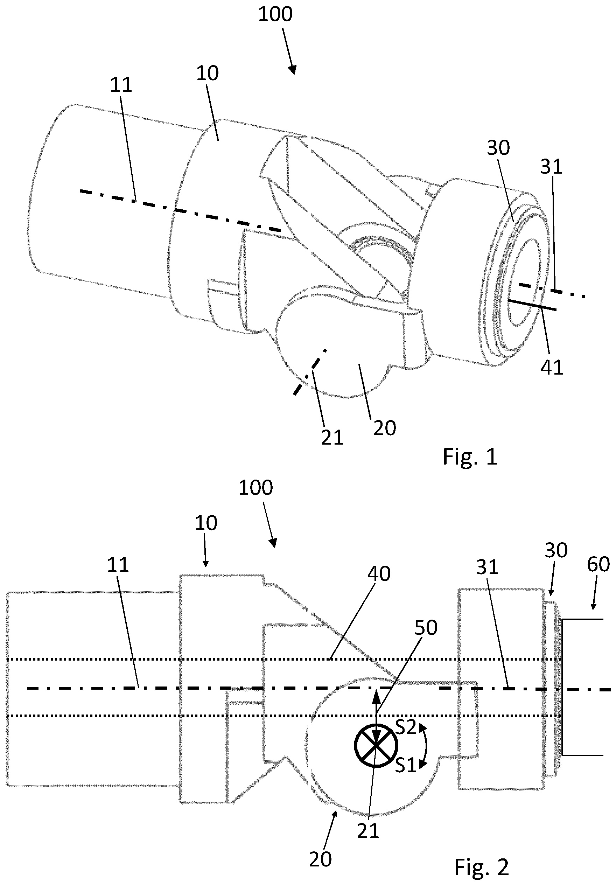

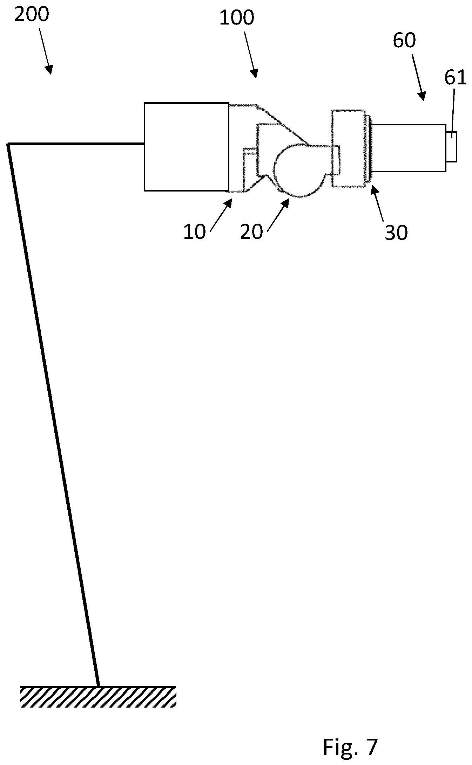

Die Figuren 1 bis 3 zeigen unterschiedliche Ansichten einer Roboterhand 100 gemäß einem Ausführungsbeispiel der Erfindung. Die Roboterhand 100 dient insbesondere zum Tragen einer Applikationsvorrichtung 60 und zur Montage an einen Applikationsroboter 200 (Figur 7).

Die Roboterhand 100 umfasst eine erste Gelenkstruktur 10, die um eine erste Achse 11 drehbar ist, eine zweite Gelenkstruktur 20, die um eine zweite Achse 21 drehbar ist, und eine dritte Gelenkstruktur 30, die um eine dritte Achse 31 drehbar ist. Somit sind die erste Gelenkstruktur 10, die zweite Gelenkstruktur 20 und die dritte Gelenkstruktur 30 relativ zueinander drehbar.

Die erste Gelenkstruktur 10 kann vorzugsweise eine kinematisch eingangsseitige Gelenkstruktur der Roboterhand 100 sein, wobei die dritte Gelenkstruktur 30 insbesondere eine kinematisch ausgangsseitige Gelenkstruktur der Roboterhand 100 sein kann.

Die zweite Gelenkstruktur 20 kann vorzugsweise kinematisch zwischen die erste Gelenkstruktur 10 und die dritte Gelenkstruktur 30 gekoppelt sein und z. B. eine Verbindungskonstruktion der ersten Gelenkstruktur 10 mit der dritten Gelenkstruktur 30 bilden.

Die Roboterhand 100 kann eine in Figur 2 nur zum Teil zu sehende Applikationsvorrichtung 60 umfassen, die mittels der Roboterhand 100, insbesondere mittels der dritten Gelenkstruktur 30, zweckmäßig mittelbar oder unmittelbar getragen werden kann. Die Applikationsvorrichtung 60 kann insbesondere eine Druckkopfeinrichtung 61 (Figur 7) umfassen, wobei die Druckkopfeinrichtung 61 eine Vielzahl an Düsen zum Ausgeben eines Applikationsmittels (z. B. Lack) auf ein Kraftfahrzeugkarosseriebauteil (z. B. eine Karosserie und/oder ein Anbauteil hierfür) aufweisen kann. Das Applikationsmittel kann z. B. in Form von zusammenhängenden Applikationsmittel-Strahlen und/oder z. B. in Form von Applikationsmittel-Tropfen etc. aus den Düsen ausgegeben werden. Die Druckkopfeinrichtung 61 dient insbesondere zum im Wesentlichen Overspray-freien Beschichten, insbesondere Lackieren.

Die Roboterhand 100 umfasst eine Leitungsdurchführung 40, die sich durch die erste Gelenkstruktur 10 und durch die dritte Gelenkstruktur 30 erstreckt und in der vorzugsweise zumindest eine Leitung 41 für die Applikationsvorrichtung 60und/oder für die Druckkopfeinrichtung 61, verläuft.

Die Leitungsdurchführung 40 kann z. B. einen Schlauch oder ein (z. B. abschnittsweise flexibles) Rohr umfassen, in der die zumindest eine Leitung 41 vorzugsweise geschützt und geführt verlaufen kann. Der Schlauch oder das Rohr kann somit eine Schutzabdeckung und/oder eine Führungsstruktur für die zumindest eine Leitung 41 bilden.

Die Roboterhand 100 umfasst auch einen festen Versatz 50 zwischen der ersten Achse 11 und der zweiten Achse 21. Der Versatz 50 kann z. B. zwischen mindestens 10 mm und maximal 100 mm lang sein.

Die zumindest eine Leitung 41, die in der Leitungsdurchführung 40 verläuft, dient vorzugsweise zur Applikationsmittel-Versorgung und somit insbesondere zur Lackversorgung der Applikationsvorrichtung 60 und/oder der Druckkopfeinrichtung 61. Die zumindest eine Leitung 41 kann aber auch z. B. zur elektrischen Energieversorgung, zur Steuerung und/oder zur Fluid-Versorgung (z. B. Luft, Druckluft und/oder Spül-/Reinigungsmittel) der Applikationsvorrichtung 60 und/oder der Drucckopfeinrichtung 61 dienen. Die zumindest eine Leitung 41 kann auch z. B. ein Datenkabel umfassen, mittels dessen Daten von und/oder zu der Druckkopfeinrichtung 61 und/oder der Applikationsvorrichtung 60 übertragbar sind.

Die Leitungsdurchführung 40 kann sich vorzugsweise auch durch die zweite Gelenkstruktur 20 erstrecken.

Die erste Achse 21 und die dritte Achse 31 können sich in einer gemeinsamen Ebene erstrecken.

Die zweite Achse 21 kreuzt die gemeinsame Ebene, vorzugsweise im Wesentlichen rechtwinklig.

Figur 2 zeigt die Roboterhand 100 in einer Neutralstellung, in der die erste Achse 11 und die dritte Achse 31 im Wesentlichen koaxial ausgerichtet sind. Die zweite Gelenkstruktur 20 kann ausgehend von der Neutralstellung zur einen Seite S1 einen Drehbereich von z. B. größer 120° oder größer 130° und von z. B. kleiner 150° aufweisen und/oder zur anderen Seiten S2 einen Drehbereich von z. B. größer 1°, größer 80° oder größer 90° und von z. B. kleiner 110° aufweisen.

Um die erste Gelenkstruktur 10 um die erste Achse 11 zu drehen, umfasst die erste Gelenkstruktur 10 einen Antrieb. Der Antrieb umfasst insbesondere einen Antriebsmotor (z. B. Elektromotor) und ist vorzugsweise ohne eigenes Gehäuse und/oder ohne eigene Lagerung an die erste Gelenkstruktur 10 gekoppelt. Der Antrieb der ersten Gelenkstruktur 10 kann somit z. B. als Bausatzmotor ausgebildet sein. Der Antrieb der ersten Gelenkstruktur 10 kann eine Motor-Hohlwelle und z. B. eine Getriebehohlwelle umfassen, durch die sich die Leitungsdurchführung 40 und die zumindest eine Leitung 41 erstrecken kann.

Um die zweite Gelenkstruktur 20 um die zweite Achse 21 zu drehen, umfasst die zweite Gelenkstruktur 20 einen Antrieb. Der Antrieb umfasst insbesondere einen Antriebsmotor (z. B. Elektromotor) und ist vorzugsweise ohne eigenes Gehäuse und/oder ohne eigene Lagerung an die zweite Gelenkstruktur 20 gekoppelt. Der Antrieb der zweiten Gelenkstruktur 20 kann somit z. B. als Bausatzmotor ausgebildet sein. Die Leitungsdurchführung 40 und die zumindest eine Leitung 41 erstreckt sich am Antrieb und/oder am Getriebe der zweiten Gelenkstruktur 20 seitlich außen vorbei.

Um die dritte Gelenkstruktur 30 um die dritte Achse 31 zu drehen, umfasst die dritte Gelenkstruktur 30 einen Antrieb. Der Antrieb umfasst insbesondere einen Antriebsmotor (z. B. Elektromotor) und ist vorzugsweise ohne eigenes Gehäuse und/oder ohne eigene Lagerung an die dritte Gelenkstruktur 30 gekoppelt. Der Antrieb der dritten Gelenkstruktur 30 kann somit z. B. als Bausatzmotor ausgebildet sein. Der Antrieb der dritten Gelenkstruktur 30 kann eine Motor-Hohlwelle und z. B. eine Getriebehohlwelle umfassen, durch die sich die Leitungsdurchführung 40 und die zumindest eine Leitung 41 erstrecken kann.

Besonders bevorzugt ist also, dass vorzugsweise alle drei Gelenkstrukturen 10, 20 und 30 über Motoren angetrieben werden können, die ohne eigene Gehäuse direkt in die jeweilige Gelenkstruktur 10, 20 und 30 integriert werden können. Dabei können die Gelenkstrukturen 10, 20 und 30 jeweils ein zweckmäßig ringförmiges Gehäuse für ihren Antrieb bilden.

Der Antrieb der dritten Gelenkstruktur 30 kann z. B. einen Direkt-Motor, insbesondere einen Torque-Motor, umfassen und/oder z. B. getriebelos ausgebildet sein. Mit Direkt-Motor, Torque-Motor und/oder getriebelosem Antrieb sind insbesondere Antriebe umfasst, bei denen das Antriebsteil und das Arbeits- und/oder Abtriebsteil ohne Getriebe zweckmäßig direkt miteinander verbunden sind.

Die erste Gelenkstruktur 10 kann ein Getriebe umfassen, vorzugsweise ein im Wesentlichen spielfreies Wellgetriebe. Auch die zweite Gelenkstruktur 20 kann ein Getriebe umfassen, vorzugsweise ein im Wesentlichen spielfreies Wellgetriebe.

Ein Wellgetriebe (z. B. auch bekannt als Spannungswellengetriebe, Gleitkeilgetriebe oder nach der englischen Bezeichnung strain wave gear (SWG)) ist ein Getriebe mit insbesondere einem elastischen Übertragungselement, das sich vorteilhaft durch eine zweckmäßig hohe Übersetzung und zweckmäßig hohe Steifigkeit auszeichnet.

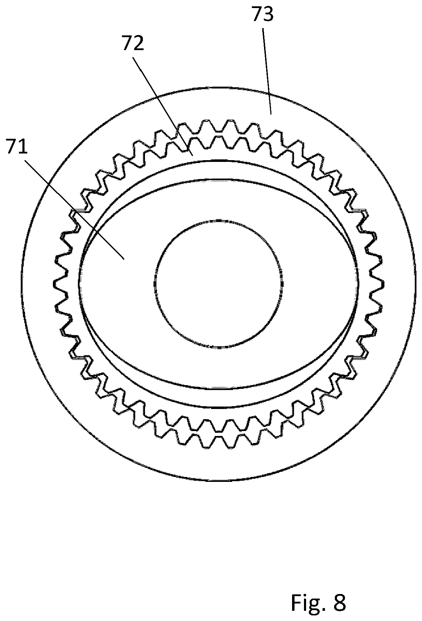

Ein Wellgetriebe, wie es vorzugsweise für die erste Gelenkstruktur 10 und/oder die zweite Gelenkstruktur 20 verwendet werden kann, wird nachfolgend unter Bezugnahme auf die Figur 8 beschrieben.

Das Wellgetriebe umfasst insbesondere eine elliptische Scheibe 71, eine verformbare im Wesentlichen zylindrische Büchse 72 mit Außenverzahnung und einen im Wesentlichen zylindrischen Außenring 73mit Innenverzahnung.

Die elliptische Scheibe 71 (z. B. Wave Generator) kann z. B. eine zentrische Nabe und ein (zweckmäßig dünnes und/oder elliptisch) verformbares Lager (z. B. Kugel- oder Wälzlager) umfassen. Die elliptische Scheibe 71 dient vorzugsweise als Antriebselement des Getriebes. Die zylindrische Büchse 72 (z. B. Flexspline) dient insbesondere als Abtriebselement des Getriebes. Der Außenring 73 (z. B. Circular spline) kann vorzugsweise die elliptische Scheibe 71 und die Büchse 72 umgeben und/oder ein Gehäuse für die elliptische Scheibe 71 und die Büchse 72 bilden.

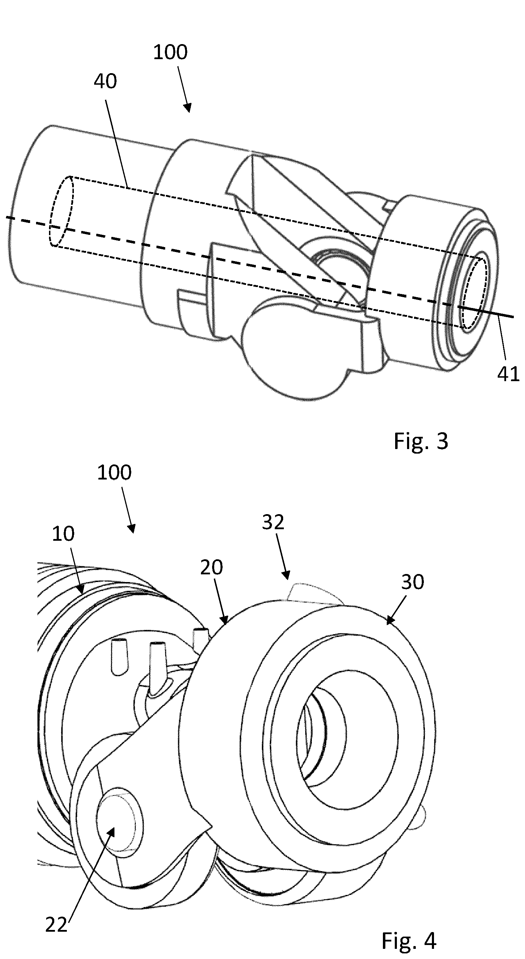

Figur 4 zeigt eine perspektivische Ansicht der Roboterhand 100, wobei in Figur 4 insbesondere eine Messeinrichtung 22 zu sehen ist.

Die Messeinrichtung 22 dient zur (vorzugsweise direkten) Drehpositionsmessung der zweiten Gelenkstruktur 20, wobei die Messeinrichtung 22 z. B. ausgebildet sein kann, um zur Drehpositionsmessung die zweite Gelenkstruktur 20 direkt zu detektieren und/oder abtriebsseitig vom Antrieb der zweiten Gelenkstruktur 20 zu detektieren (z. B. optisch, mit räumlicher Beabstandung, mit physischem Eingriff, kontaktierend oder kontaktlos etc.). Dadurch kann vorteilhaft ermöglicht werden, dass Verschleiß, Spiel und/oder Hysterese im Antriebsstrang der Roboterhand 100 zu keiner oder keiner wesentlichen Verschlechterung der Genauigkeit der Positionserfassung führen.

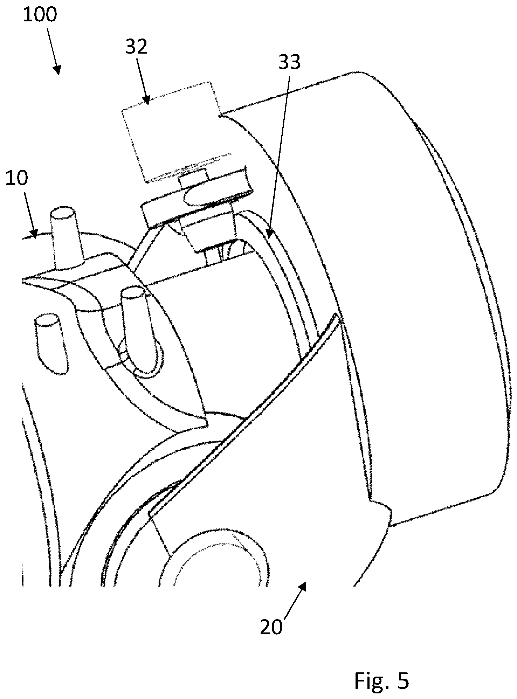

Figur 5 zeigt eine perspektivische Ansicht der Roboterhand 100, wobei in Figur 5 insbesondere eine Messeinrichtung 32 zu sehen ist.

Die Messeinrichtung 32 dient zur (vorzugsweise direkten) Drehpositionsmessung der dritten Gelenkstruktur 30, wobei die Messeinrichtung 32 z. B. ausgebildet sein kann, um zur Drehpositionsmessung die dritte Gelenkstruktur 30 direkt zu detektieren und/oder abtriebsseitig vom Antrieb der dritten Gelenkstruktur 30 zu detektieren (z. B. optisch, mit räumlicher Beabstandung, mit physischem Eingriff, kontaktierend oder kontaktlos etc.). Dadurch kann vorteilhaft ermöglicht werden, dass Verschleiß, Spiel und/oder Hysterese im Antriebsstrang der Roboterhand 100 zu keiner oder keiner wesentlichen Verschlechterung der Genauigkeit der Positionserfassung führen.

Es ist z. B. wie in Figur 5 zu sehen möglich, dass die Messeinrichtung 32 zur Drehpositionsmessung der dritten Gelenkstruktur 30 z. B. an der zweiten Gelenkstruktur 20 montiert ist und insbesondere über eine vorzugsweise im Wesentlichen spielfreie, vorgespannte Kopplungsstruktur 33, vorzugsweise eine Zahnradpaarung und/oder eine Kegelradstufe, mit der dritten Gelenkstruktur 30 verbunden ist, um so eine direkte und/oder abtriebsseitige Drehpositionsmessung zu ermöglichen. Die Kopplungsstruktur 33 ist vorzugsweise winklig ausgeführt, z B. als Kegelradstufe, wobei auch achsparallele Kopplungsstrukturen 33 möglich sind. Die Kopplungsstruktur 33 kann insbesondere miteinander in Eingriff stehende (z. B. konische) Zahnräder umfassen.

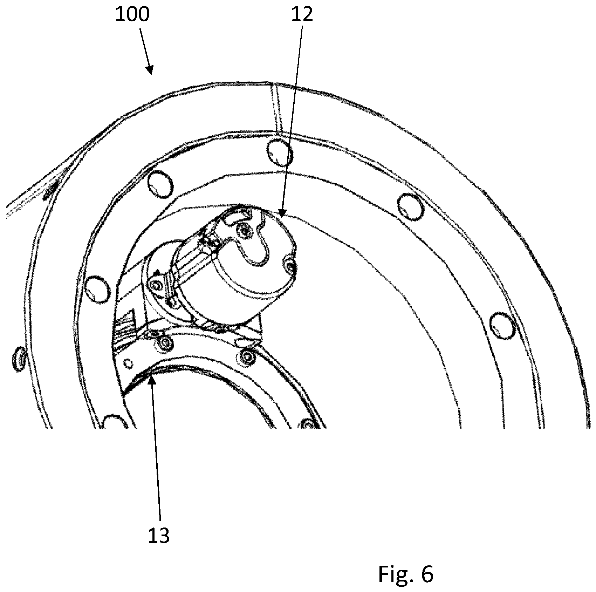

Figur 6 zeigt eine perspektivische Ansicht der Roboterhand 100, wobei in Figur 6 insbesondere eine Messeinrichtung 12 zu sehen ist.

Die Messeinrichtung 12 dient zur (vorzugsweise direkten) Drehpositionsmessung der ersten Gelenkstruktur 10, wobei die Messeinrichtung 12 z. B. ausgebildet sein kann, um zur Drehpositionsmessung die erste Gelenkstruktur 10 direkt zu detektieren und/oder abtriebsseitig vom Antrieb der ersten Gelenkstruktur 10 zu detektieren (z. B. optisch, mit räumlicher Beabstandung, mit physischem Eingriff, kontaktierend oder kontaktlos etc.). Dadurch kann vorteilhaft ermöglicht werden, dass Verschleiß, Spiel und/oder Hysterese im Antriebsstrang der Roboterhand 100 zu keiner oder keiner wesentlichen Verschlechterung der Genauigkeit der Positionserfassung führen.

Es ist z. B. wie in Figur 6 zu sehen möglich, dass die Messeinrichtung 12 zur Drehpositionsmessung der ersten Gelenkstruktur 10 über eine vorzugsweise im Wesentlichen spielfreie, vorgespannte Kopplungsstruktur 13, vorzugsweise eine Zahnradpaarung und/oder eine Kegelradstufe, mit der ersten Gelenkstruktur 10 verbunden ist, um so eine direkte und/oder abtriebsseitige Drehpositionsmessung zu ermöglichen. Die Kopplungsstruktur 13 ist vorzugsweise achsparallel ausgeführt, z B. mittels miteinander in Eingriff stehenden konischen Zahnrädern, wobei auch winklige Kopplungsstrukturen 13 möglich sind.

Die Messeinrichtungen 12, 22 und 32 können z. B. optische, zweckmäßig hochauflösende Messeinrichtungen sein, insbesondere mit einer Auflösung mit einer Fehlertoleranz von 10 oder 5 arcsec (arcsec = Winkelsekunden). Die Messeinrichtungen 11, 22 und 32 sind aber nicht auf optische Messeinrichtungen eingeschränkt, sondern können jedwede andere geeignete Messtechnik umfassen.

Es ist möglich, dass die Roboterhand 100 eine in den Figuren nicht gezeigte zusätzliche Messeinrichtung zur insbesondere antriebsseitigen Drehpositionsmessung der ersten Gelenkstruktur 10 aufweist. Diese zusätzliche Messeinrichtung kann z. B. ausgebildet sein, um insbesondere zur Drehpositionsmessung den Antrieb (z. B. dessen Antriebswelle, insbesondere die Motor- und Getriebe-Hohlwelle) der ersten Gelenkstruktur 10 (zweckmäßig direkt) zu detektieren. Diese zusätzliche Messeinrichtung kann z. B. direkt an die Antriebswelle angebunden sein.

Die Roboterhand 100 kann z. B. eine in den Figuren nicht gezeigte zusätzliche Messeinrichtung zur insbesondere antriebsseitigen Drehpositionsmessung der zweiten Gelenkstruktur 20 umfassen. Diese zusätzliche Messeinrichtung kann z. B. ausgebildet sein, um insbesondere zur Drehpositionsmessung den Antrieb (z. B. dessen Rotor oder Antriebswelle) der zweiten Gelenkstruktur 20 (zweckmäßig direkt) zu detektieren. Alternativ oder ergänzend kann die Roboterhand 100 z. B. eine in den Figuren nicht gezeigte zusätzliche Messeinrichtung zur insbesondere antriebsseitigen Drehpositionsmessung der dritten Gelenkstruktur 30 umfassen. Diese zusätzliche Messeinrichtung kann z. B. ausgebildet sein, um insbesondere zur Drehpositionsmessung den Antrieb (z. B. dessen Antriebswelle, insbesondere die Motor-Hohlwelle) der dritten Gelenkstruktur 30 (zweckmäßig direkt) zu detektieren.

Folglich kann die Roboterhand 100 z.B. eine insbesondere abtriebsseitige Messeinrichtung 12, 22, 32 und/oder eine insbesondere antriebsseitige Messeinrichtung zur Drehpositionsmessung der ersten Gelenkstruktur 10, der zweiten Gelenkstruktur 20 und/oder der dritten Gelenkstruktur 30 aufweisen.

Figur 7 zeigt eine schematische Ansicht eines Applikationsroboters 200 mit Roboterhand 100.

Der Applikationsroboter 200 ist vorzugsweise ein Lackierroboter und trägt mittels der Roboterhand 100 eine Applikationsvorrichtung 60. Die Applikationsvorrichtung 60 umfasst vorzugsweise eine Druckkopfeinrichtung 61 mit einer Vielzahl an Düsen zum Ausgeben des Applikationsmittels (z. B. Lack). Die Applikationsvorrichtung 60 kann allerdings auch einen anderen Applikator als einen Druckkopf umfassen, z. B. einen Zerstäuber oder nur eine Düse etc.

Die zumindest eine Leitung 41, die sich durch die Leitungsdurchführung 40 erstreckt, umfasst vorzugsweise eine Medienleitung zur Applikationsmittel-Versorgung und/oder zur Fluid-Versorgung (z. B. Luft, Spül-/Reinigungsmittel, Druckluft etc.) der Applikationsvorrichtung 60 und/oder der Drucckopfeinrichtung 61. Die zumindest eine Leitung 41 kann aber alternativ oder ergänzend z. B. ein Kabel zur Steuerung und/oder zur vorzugsweise elektrischen Energieversorgung der Applikationsvorrichtung 60 und/oder der Druckkopfeinrichtung 61 umfassen.

Wesentliche Vorteile der Erfindung sind z. B.:
- signifikante Erhöhung der mechanischen Genauigkeit der Roboterhand 100, z. B. durchspielfreie Getriebe an den Gelenkstrukturen 10 und 20 und z. B. Direktantrieb der Gelenkstruktur 30,
- direktes Messsystem an der Roboterhand 100, insbesondere an den Gelenkstrukturen 10, 20 und 30,
- Medienführung (z. B. Fluidführung, insbesondere Lack, Luft, Druckluft und/oder Reinigungs-/Spülmittel) und/oder Kabelführung durch die Roboterhand 100,
- großer Bewegungsbereich insbesondere der Gelenkstruktur 20, z. B. von ungefähr 100° bis ungefähr 140°,
- hohe Steifigkeit der Roboterhand 100, und/oder
- gute Dynamik der Roboterhand 100 durch kleine zu beschleunigende Massen.

### Bezugszeichenliste

- 10: erste Gelenkstruktur
- 11: erste Achse
- 12: Messeinrichtung für erste Gelenkstruktur
- 13: Kopplungsstruktur

- 20: zweite Gelenkstruktur
- 21: zweite Achse
- 22: Messeinrichtung für zweite Gelenkstruktur

- 30: dritte Gelenkstruktur
- 31: dritte Achse
- 32: Messeinrichtung für dritte Gelenkstruktur
- 33: Kopplungsstruktur

- 40: Leitungsdurchführung, vorzugsweise in der zumindest eine Leitung verläuft
- 41: zumindest eine Leitung

- 50: Versatz

- 60: Applikationsvorrichtung
- 61: Druckkopfeinrichtung

- 71: Scheibe
- 72: Büchse
- 73: Außenring

- S1: Seite
- S2: Seite

- 100: Roboterhand

- 200: Applikationsroboter, vorzugsweise Lackierroboter

## Patentansprüche

1. Roboterhand (100), vorzugsweise zum Tragen einer vorzugsweise eine Druckkopfeinrichtung (61) aufweisenden Applikationsvorrichtung (60), mit
- einer ersten Gelenkstruktur (10), die um eine erste Achse (11) drehbar ist,
- einer zweiten Gelenkstruktur (20), die um eine zweite Achse (21) drehbar ist,
- einer dritten Gelenkstruktur (30), die um eine dritte Achse (31) drehbar ist,
- einer Leitungsdurchführung (40), die sich durch die erste Gelenkstruktur (10) und durch die dritte Gelenkstruktur (30) erstreckt und vorzugsweise in der zumindest eine Leitung (41) verläuft, und
- einem Versatz (50) zwischen der ersten Achse (11) und der zweiten Achse (21),
- wobei die zweite Gelenkstruktur (20) einen Antrieb umfasst, um die zweite Gelenkstruktur (20) um die zweite Achse (21) zu drehen, und/oder ein Getriebe umfasst,
**dadurch gekennzeichnet, dass**
- die Leitungsdurchführung (40) sich am Antrieb und/oder am Getriebe der zweiten Gelenkstruktur (20) außen vorbei erstreckt.

2. Roboterhand (100) nach Anspruch 1, **dadurch gekennzeichnet, dass**
- die erste Gelenkstruktur (10) ein hohles Zentrum aufweist, durch das sich die Leitungsdurchführung (40) erstreckt, und/oder
- die dritte Gelenkstruktur (30) ein hohles Zentrum aufweist, durch das sich die Leitungsdurchführung (40) erstreckt.

3. Roboterhand (100) nach einem der vorhergehenden Ansprüche, **dadurch gekennzeichnet, dass** die erste Gelenkstruktur (10) eine kinematisch eingangsseitige Gelenkstruktur (10) ist und die dritte Gelenkstruktur (30) eine kinematisch ausgangsseitige Gelenkstruktur (30) ist.

4. Roboterhand (100) nach einem der vorhergehenden Ansprüche, **dadurch gekennzeichnet, dass** die zweite Gelenkstruktur (20) kinematisch zwischen die erste Gelenkstruktur (10) und die dritte Gelenkstruktur (30) gekoppelt ist.

5. Roboterhand (100) nach einem der vorhergehenden Ansprüche, **dadurch gekennzeichnet, dass**
- die erste Gelenkstruktur (10) ein Getriebe umfasst, das vorzugsweise ein Wellgetriebe ist, und/oder
- das Getriebe der zweiten Gelenkstruktur (20) ein Wellgetriebe ist.

6. Roboterhand (100) nach einem der vorhergehenden Ansprüche, **dadurch gekennzeichnet, dass**
- die erste Gelenkstruktur (10) einen Antrieb umfasst, um die erste Gelenkstruktur (10) um die erste Achse (11) zu drehen, und/oder
- die dritte Gelenkstruktur (30) einen Antrieb umfasst, um die dritte Gelenkstruktur (30) um die dritte Achse (31) zu drehen.

7. Roboterhand (100) nach einem der vorhergehenden Ansprüche, **dadurch gekennzeichnet, dass**
- der Antrieb der ersten Gelenkstruktur (10) ohne eigenes Gehäuse und/oder ohne eigene Lagerung an die erste Gelenkstruktur (10) gekoppelt ist, und/oder
der Antrieb der zweiten Gelenkstruktur (20) ohne eigenes Gehäuse und/oder ohne eigene Lagerung an die zweite Gelenkstruktur (20) gekoppelt ist, und/oder
- der Antrieb der dritten Gelenkstruktur (30) ohne eigenes Gehäuse und/oder ohne eigene Lagerung an die dritte Gelenkstruktur (30) gekoppelt ist.

8. Roboterhand (100) nach einem der vorhergehenden Ansprüche, **dadurch gekennzeichnet, dass**
- die erste Gelenkstruktur (10) ein vorzugsweise ringförmiges Gehäuse für ihren Antrieb bildet, und/oder
- die zweite Gelenkstruktur (20) ein vorzugsweise ringförmiges Gehäuse für ihren Antrieb bildet, und/oder
- die dritte Gelenkstruktur (30) ein vorzugsweise ringförmiges Gehäuse für ihren Antrieb bildet.

9. Roboterhand (100) nach einem der vorhergehenden Ansprüche, **dadurch gekennzeichnet, dass**
- die erste Gelenkstruktur (10) zur Kühlung ihres Antriebs außenseitig zumindest einen Kühlkörper aufweist und/oder mit einer Aktivkühlung ausgestattet ist, und/oder
- die zweite Gelenkstruktur (20) zur Kühlung ihres Antriebs außenseitig zumindest einen Kühlkörper aufweist und/oder mit einer Aktivkühlung ausgestattet ist, und/oder
- die dritte Gelenkstruktur (30) zur Kühlung ihres Antriebs außenseitig zumindest einen Kühlkörper aufweist und/oder mit einer Aktivkühlung ausgestattet ist.

10. Roboterhand (100) nach einem der vorhergehenden Ansprüche, **dadurch gekennzeichnet, dass** der Antrieb der dritten Gelenkstruktur (30) einen Direktantrieb, insbesondere einen Torque-Motor, umfasst und/oder getriebelos ausgebildet ist.

11. Roboterhand (100) nach einem der Ansprüche 5 bis 10, **dadurch gekennzeichnet, dass** die Leitungsdurchführung (40)
- sich durch den Antrieb und/oder das Getriebe der ersten Gelenkstruktur (10) erstreckt, und/oder
- sich durch den Antrieb der dritten Gelenkstruktur (30) erstreckt.

12. Roboterhand (100) nach einem der Ansprüche 6 bis 11, **dadurch gekennzeichnet, dass**
- der Antrieb der ersten Gelenkstruktur (10) eine Motor- und Getriebe-Hohlwelle umfasst, durch die sich die Leitungsdurchführung (40) erstreckt, und/oder
- der Antrieb der dritten Gelenkstruktur (30) eine Motor-Hohlwelle umfasst, durch die sich die Leitungsdurchführung (40) erstreckt.

13. Roboterhand (100) nach einem der vorhergehenden Ansprüche, **dadurch gekennzeichnet, dass** die Roboterhand (100) eine Messeinrichtung (12) zur Drehpositionsmessung der ersten Gelenkstruktur (10) aufweist, wobei vorzugsweise die Messeinrichtung (12) ausgebildet ist, um zur Drehpositionsmessung
- die erste Gelenkstruktur (10) direkt zu detektieren, und/oder
- abtriebsseitig vom Antrieb der ersten Gelenkstruktur (10) zu detektieren.

14. Roboterhand (100) nach Anspruch 13, **dadurch gekennzeichnet, dass** die Messeinrichtung (12) zur Drehpositionsmessung der ersten Gelenkstruktur (10) über eine, vorzugsweise spielfreie und/oder vorgespannte, Kopplungsstruktur (13) mit der ersten Gelenkstruktur (10) verbunden ist.

15. Roboterhand (100) nach einem der Ansprüche 13 bis 14, **dadurch gekennzeichnet, dass** die Roboterhand (100) eine zusätzliche Messeinrichtung zur antriebsseitigen Drehpositionsmessung der ersten Gelenkstruktur (10) aufweist, wobei vorzugsweise die zusätzliche Messeinrichtung ausgebildet ist, um zur Drehpositionsmessung den Antrieb der ersten Gelenkstruktur (10) zu detektieren.

16. Roboterhand (100) nach einem der vorhergehenden Ansprüche, **dadurch gekennzeichnet, dass** die Roboterhand (100) eine Messeinrichtung (22) zur Drehpositionsmessung der zweiten Gelenkstruktur (20) aufweist, wobei vorzugsweise die Messeinrichtung (22) ausgebildet ist, um zur Drehpositionsmessung die zweite Gelenkstruktur (20)
- direkt zu detektieren, und/oder
- abtriebsseitig vom Antrieb der zweiten Gelenkstruktur (20) zu detektieren.

17. Roboterhand (100) nach einem der vorhergehenden Ansprüche, **dadurch gekennzeichnet, dass** die Roboterhand (100) eine Messeinrichtung (32) zur Drehpositionsmessung der dritten Gelenkstruktur (30) aufweist, wobei vorzugsweise die Messeinrichtung (32) ausgebildet ist, um zur Drehpositionsmessung die dritte Gelenkstruktur (30)
- direkt zu detektieren, und/oder
- abtriebsseitig vom Antrieb der dritten Gelenkstruktur (30) zu detektieren.

18. Roboterhand (100) nach Anspruch 17, **dadurch gekennzeichnet, dass** die Messeinrichtung (32) zur Drehpositionsmessung der dritten Gelenkstruktur (30)
- an der zweiten Gelenkstruktur (20) montiert ist, und/oder
- über eine, vorzugsweise spielfreie und/oder vorgespannte, Kopplungsstruktur (33) mit der dritten Gelenkstruktur (30) verbunden ist.

19. Roboterhand (100) nach einem der Ansprüche 14 bis 18, **dadurch gekennzeichnet, dass** die Kopplungsstruktur (13) der ersten Gelenkstruktur (10) und/oder die Kopplungsstruktur (33) der dritten Gelenkstruktur (30)
- drehbar ist, und/oder
- miteinander in Eingriff stehende Zähne aufweist und/oder
- achsparallel oder winklig ausgeführt ist, und/oder
- miteinander in Eingriff stehende konische Zahnräder umfasst.

20. Roboterhand (100) nach einem der Ansprüche 13 bis 19, **dadurch gekennzeichnet, dass** die Messeinrichtung (12) der ersten Gelenkstruktur (10), die Messeinrichtung (22) der zweiten Gelenkstruktur (20) und/oder die Messeinrichtung (23) der dritten Gelenkstruktur (30) eine Auflösung mit einer Fehlertoleranz von 10 arcsec, vorzugsweise 5 arcsec, aufweist.

21. Roboterhand (100) nach einem der vorhergehenden Ansprüche, **dadurch gekennzeichnet, dass** die Roboterhand (100) eine Neutralstellung aufweist, in der die erste Achse (11) und die dritte Achse (31) im Wesentlichen koaxial ausgerichtet sind, wobei vorzugsweise die zweite Gelenkstruktur (20) ausgehend von der Neutralstellung
- zur einen Seite (S1) einen Drehbereich von größer 120° oder größer 130° aufweist, und/oder
- zur anderen Seiten (S2) einen Drehbereich von größer 1°, größer 80° oder größer 90° aufweist.

22. Roboterhand (100) nach einem der vorhergehenden Ansprüche, **dadurch gekennzeichnet, dass**
- die erste Gelenkstruktur (10) einen Drehbereich um die erste Achse (11) von über +/- 340° oder von zumindest +/-360° aufweist, und/oder
- die dritte Gelenkstruktur (30) einen Drehbereich um die dritte Achse (31) von über +/- 340° oder von zumindest +/- 360° oder zumindest +/- 700° aufweist.

23. Roboterhand (100) nach einem der vorhergehenden Ansprüche, **dadurch gekennzeichnet, dass** der Versatz (50) mindestens 10 mm und maximal 100 mm lang ist.

24. Roboterhand (100) nach einem der vorhergehenden Ansprüche, **gekennzeichnet durch** eine Applikationsvorrichtung (60), die vorzugsweise eine Druckkopfeinrichtung (61) mit einer Vielzahl an Düsen zum Ausgeben eines Applikationsmittels auf ein Kraftfahrzeugkarosseriebauteil umfasst.

25. Roboterhand (100) nach einem der vorhergehenden Ansprüche, **dadurch gekennzeichnet, dass** die zumindest eine Leitung (41)
- zumindest eine Medienleitung zur Applikationsmittel-Versorgung und/oder zur Fluid-Versorgung der Applikationsvorrichtung (60) und/oder der Druckkopfeinrichtung (61) umfasst, und/oder
- zumindest eine Medienrückführleitung zur Rückführung eines Fluids aus der Applikationsvorrichtung (60) und/oder der Druckkopfeinrichtung (61) umfasst, und/oder
- zumindest ein Kabel zur Energieversorgung und/oder zur Steuerung der Applikationsvorrichtung (60) und/oder der Druckkopfeinrichtung (61) umfasst.

26. Roboterhand (100) nach einem der vorhergehenden Ansprüche, **dadurch gekennzeichnet, dass** die Leitungsdurchführung (40), vorzugsweise in der ersten Gelenkstruktur (10) und/oder in der dritten Gelenkstruktur (30), einen Durchlassquerschnitt von mindestens 40mm bis maximal 90mm aufweist, vorzugsweise von 70mm +/- 5mm.

27. Applikationsroboter (200), vorzugsweise Lackierroboter, mit einer Roboterhand (100) nach einem der vorhergehenden Ansprüche.

## Claims

1. Robot hand (100), preferably for carrying an application apparatus (60) preferably comprising a print head device (61), with
- a first joint structure (10) which is rotatable about a first axis (11)
- a second joint structure (20) which is rotatable about a second axis (21), and
- a third joint structure (30) which is rotatable about a third axis (31),
- a line feed-through (40) which extends through the first joint structure (10) and through the third joint structure (30) and preferably in which at least one line (41) runs, and
- an offset (50) between the first axis (11) and the second axis (21),
- wherein the second joint structure (20) comprises a drive to rotate the second joint structure (20) about the second axis (21), and/or comprises a gear,
**characterized in that**
- the line feed-through (40) extends externally past the drive and/or the gear of the second joint structure (20).

2. Robot hand (100) according to claim 1, **characterized in that**
- the first joint structure (10) has a hollow center through which the line feed-through (40) extends, and/or
- the third joint structure (30) has a hollow center through which the line feed-through (40) extends.

3. Robot hand (100) according to any one of the preceding claims, **characterized in that** the first joint structure (10) is a kinematically inlet-sided joint structure (10) and the third joint structure (30) is a kinematically outlet-sided joint structure (30).

4. Robot hand (100) according to any one of the preceding claims, **characterized in that** the second joint structure (20) is coupled kinematically between the first joint structure (10) and the third joint structure (30).

5. Robot hand (100) according to any one of the preceding claims, **characterized in that**
- the first joint structure (10) comprises a gear that is preferably strain wave gear, and/or
- the gear of the second joint structure (20) is a strain wave gear.

6. Robot hand (100) according to any one of the preceding claims, **characterized in that**
- the first joint structure (10) comprises a drive to rotate the first joint structure (10) about the first axis (11), and/or
- the third joint structure (30) comprises a drive to rotate the third joint structure (30) about the third axis (31).

7. Robot hand (100) according to any one of the preceding claims, **characterized in that**
- the drive of the first joint structure (10) is coupled, without own housing and/or without own bearing, to the first joint structure (10), and/or
the drive of the second joint structure (20) is coupled, without own housing and/or without own bearing, to the second joint structure (20), and/or
- the drive of the third joint structure (30) is coupled, without own housing and/or without own bearing, to the third joint structure (30).

8. Robot hand (100) according to any one of the preceding claims, **characterized in that**
- the first joint structure (10) forms a preferably ring-shaped housing for its drive, and/or
- the second joint structure (20) forms a preferably ring-shaped housing for its drive, and/or
- the third joint structure (30) forms a preferably ring-shaped housing for its drive.

9. Robot hand (100) according to any one of the preceding claims, **characterized in that**
- the first joint structure (10), for cooling its drive, has externally at least one cooling body and/or is equipped with an active cooling, and/or
- the second joint structure (20), for cooling its drive, has externally at least one cooling body and/or is equipped with an active cooling, and/or
- the third joint structure (30), for cooling its drive, has externally at least one cooling body and/or is equipped with an active cooling.

10. Robot hand (100) according to any one of the preceding claims, **characterized in that** the drive of the third joint structure (30) comprises a direct drive, in particular a torque motor, and/or is configured gearless.

11. Robot hand (100) according to any one of claims 5 to 10, **characterized in that** the line feed-through (40)
- extends through the drive and/or the gear of the first joint structure (10), and/or
- extends through the drive of the third joint structure (30).

12. Robot hand (100) according to any one of claims 6 to 11, **characterized in that**
- the drive of the first joint structure (10) comprises a motor and gear hollow shaft through which the line feed-through (40) extends, and/or
- the drive of the third joint structure (30) comprises a motor hollow shaft through which the line feed-through (40) extends.

13. Robot hand (100) according to any one of the preceding claims, **characterized in that** the robot hand (100) has a measuring device (12) for rotary position measurement of the first joint structure (10), wherein preferably the measuring device (12) is configured, for rotary position measurement,
- to detect the first joint structure (10) directly, and/or
- to detect it output-sided from the drive of the first joint structure (10).

14. Robot hand (100) according to claim 13, **characterized in that** the measuring device (12) for rotary position measurement of the first joint structure (10) is connected to the first joint structure (10) via a, preferably play-free and/or preloaded, coupling structure (13).

15. Robot hand (100) according to any one of claims 13 to 14, **characterized in that** the robot hand (100) has an additional measuring device for drive-sided rotary position measurement of the first joint structure (10), wherein preferably the additional measuring device is configured, for rotary position measurement, to detect the drive of the first joint structure (10).

16. Robot hand (100) according to any one of the preceding claims, **characterized in that** the robot hand (100) has a measuring device (22) for rotary position measurement of the second joint structure (20), wherein preferably the measuring device (22) is configured, for rotary position measurement,
- to detect the second joint structure (20) directly, and/or
- to detect the second joint structure (20) output-sided from the drive of the second joint structure (20).

17. Robot hand (100) according to any one of the preceding claims, **characterized in that** the robot hand (100) has a measuring device (32) for rotary position measurement of the third joint structure (30), wherein preferably the measuring device (32) is configured, for rotary position measurement,
- to detect the third joint structure (30) directly, and/or
- to detect the third joint structure (30) output-sided from the drive of the third joint structure (30).

18. Robot hand (100) according to claim 17, **characterized in that** the measuring device (32) for rotary position measurement of the third joint structure (30)
- is mounted on the second joint structure (20), and/or
- is connected to the third joint structure (30) via a, preferably play-free and/or preloaded, coupling structure (33).

19. Robot hand (100) according to any one of claims 14 to 18, **characterized in that** the coupling structure (13) of the first joint structure (10) and/or the coupling structure (33) of the third joint structure (30)
- is rotatable, and/or
- has intermeshing teeth, and/or
- is configured axis-parallel or angular, and/or
- has intermeshing conical gear wheels.

20. Robot hand (100) according to any one of claims 13 to 19, **characterized in that** the measuring device (12) of the first joint structure (10), the measuring device (22) of the second joint structure (20) and/or the measuring device (23) of the third joint structure (30) has a resolution with an error tolerance of 10 arcsec, preferably 5 arcsec.

21. Robot hand (100) according to any one of the preceding claims, **characterized in that** the robot hand (100) has a neutral position in which the first axis (11) and the third axis (31) are substantially coaxially aligned, wherein preferably the second joint structure (20), starting from the neutral position
- has a range of rotation of greater than 120° or greater than 130° to one side (S1), and/or
- has a range of rotation of greater than 1°, greater than 80° or greater than 90° to the other side (S2).

22. Robot hand (100) according to any one of the preceding claims, **characterized in that**
- the first joint structure (10) has a range of rotation about the first axis (11) of more than +/- 340° or of at least +/-360°, and/or
- the third joint structure (30) has a range of rotation about the third axis (31) of more than +/- 340° or at least +/- 360° or at least +/- 700°.

23. Robot hand (100) according to any one of the preceding claims, **characterized in that** the offset (50) is at least 10 mm and maximal 100 mm long.

24. Robot hand (100) according to any one of the preceding claims, **characterized by** an application apparatus (60), which preferably comprises a print head device (61) with a plurality of nozzles for dispensing an application agent onto a motor vehicle body component.

25. Robot hand (100) according to any one of the preceding claims, **characterized in that** the at least one line (41)
- comprises at least one media line for application agent supply and/or for fluid supply of the application apparatus (60) and/or the print head device (61), and/or
- comprises at least one media return line for returning a fluid from the application apparatus (60) and/or the print head device (61), and/or
- comprises at least one cable for power supply and/or for control of the application apparatus (60) and/or the print head device (61).

26. Robot hand (100) according to any one of the preceding claims, **characterized in that** the line feed-through (40), preferably in the first joint structure (10) and/or in the third joint structure (30), has a passage cross-section of at least 40 mm to maximal 90 mm, preferably of 70 mm +/- 5 mm.

27. Application robot (200), preferably painting robot, with a robot hand (100) according to any one of the preceding claims.

## Revendications

1. Main robotisée (100), destinée de préférence à porter un dispositif d'application (60) présentant de préférence un dispositif à tête d'impression (61), avec
une première structure articulée (10) pouvant tourner autour d'un premier axe (11),
une deuxième structure articulée (20) pouvant tourner autour d'un deuxième axe (21),
une troisième structure articulée (30) pouvant tourner autour d'un troisième axe (31),
un passage de conduite (40) s'étendant à travers la première structure articulée (10) et à travers
la troisième structure articulée (30) et dans lequel s'étend de préférence au moins une conduite (41),
et
un décalage (50) entre le premier axe (11) et le deuxième axe (21), la deuxième structure articulée (20) comprenant un entraînement pour faire pivoter la deuxième structure articulée (20) autour du deuxième axe (21), et/ou un engrenage, **caractérisé en ce que**
le passage de conduite (40) s'étend à l'extérieur de l'entraînement et/ou de l'engrenage de la deuxième structure articulée (20).

2. Main robotisée (100) selon la revendication 1, **caractérisée en ce que**
la première structure articulée (10) présente un centre creux à travers lequel s'étend le passage de conduite (40), et/ou
la troisième structure articulée (30) présente un centre creux à travers lequel s'étend le passage de conduite (40).

3. Main robotisée (100) selon l'une des revendications précédentes, **caractérisée en ce que** la première structure articulée (10) est une structure articulée cinématiquement côté entrée (10) et la troisième structure articulée (30) est une structure articulée cinématiquement côté sortie (30).

4. Main robotisée (100) selon l'une des revendications précédentes, **caractérisée en ce que** la deuxième structure articulée (20) est couplée cinématiquement entre la première structure articulée (10) et la troisième structure articulée (30).

5. Main robotisée (100) selon l'une des revendications précédentes, **caractérisée en ce que**
la première structure articulée (10) comprend un mécanisme, de préférence un mécanisme à arbre ondulé, et/ou
le mécanisme de la deuxième structure articulée (20) est un mécanisme à arbre ondulé.

6. Main robotisée (100) selon l'une des revendications précédentes, **caractérisée en ce que**
la première structure articulée (10) comprend un entraînement pour faire pivoter la première structure articulée (10) autour du premier axe (11), et/ou
la troisième structure articulée (30) comprend un entraînement pour faire tourner la troisième structure articulée (30) autour du troisième axe (31).

7. Main robotisée (100) selon l'une des revendications précédentes, **caractérisée en ce que**
l'entraînement de la première structure articulée (10) est couplé à la première structure articulée (10) sans boîtier propre et/ou sans palier propre, et/ou
l'entraînement de la deuxième structure articulée (20) est couplé à la deuxième structure articulée (20) sans boîtier propre et/ou sans palier propre, et/ou
l'entraînement de la troisième structure articulée (30) est couplé à la troisième structure articulée (30) sans boîtier propre et/ou sans palier propre.

8. Main robotisée (100) selon l'une des revendications précédentes, **caractérisée en ce que**
la première structure articulée (10) forme un boîtier de préférence annulaire pour son entraînement, et/ou
la deuxième structure articulée (20) forme un boîtier de préférence annulaire pour son entraînement, et/ou
la troisième structure articulée (30) forme un boîtier de préférence annulaire pour son entraînement.

9. Main robotisée (100) selon l'une des revendications précédentes, **caractérisée en ce que**
la première structure articulée (10) présente au moins un dissipateur thermique à l'extérieur pour refroidir son entraînement et/ou est équipée d'un système de refroidissement actif, et/ou
la deuxième structure articulée (20) présente au moins un dissipateur thermique à l'extérieur pour refroidir son entraînement et/ou est équipée d'un système de refroidissement actif, et/ou
la troisième structure articulée (30) présente au moins un dissipateur thermique à l'extérieur pour refroidir son entraînement et/ou est équipée d'un refroidissement actif.

10. Main robotisée (100) selon l'une des revendications précédentes, **caractérisée en ce que** l'entraînement de la troisième structure articulée (30) comprend un entraînement direct, en particulier un moteur couple, et/ou est conçu sans engrenage.

11. Main robotisée (100) selon l'une des revendications 5 à 10, **caractérisée en ce que** le passage de conduite (40)
s'étend à travers l'entraînement et/ou la transmission de la première structure articulée (10) et/ou
s'étend à travers l'entraînement de la troisième structure articulée (30).

12. Main robotisée (100) selon l'une des revendications 6 à 11, **caractérisée en ce que** l'entraînement de la première structure articulée (10) comprend un moteur et un arbre creux de transmission à travers lequel s'étend le passage de conduite (40), et/ou
l'entraînement de la troisième structure articulée (30) comprend un arbre creux de moteur à travers lequel s'étend le passage de conduite (40).

13. Main robotisée (100) selon l'une des revendications précédentes, **caractérisée en ce que** la main robotisée (100) présente un dispositif de mesure (12) pour mesurer la position de rotation de la première structure articulée (10), le dispositif de mesure (12) étant de préférence conçu pour détecter directement
la première structure articulée (10) afin de mesurer la position de rotation et/ou
afin de la détecter du côté sortie de l'entraînement de la première structure articulée (10).

14. Main robotisée (100) selon la revendication 13, **caractérisée en ce que** le dispositif de mesure (12) destiné à mesurer la position de rotation de la première structure articulée (10) est relié à la première structure articulée (10) par l'intermédiaire d'une structure de couplage (13) de préférence sans jeu et/ou précontrainte.

15. Main robotisée (100) selon l'une des revendications 13 à 14, **caractérisée en ce que** la main robotisée (100) présente un dispositif de mesure supplémentaire pour mesurer la position de rotation côté entraînement de la première structure articulée (10), le dispositif de mesure supplémentaire étant de préférence conçu pour détecter l'entraînement de la première structure articulée (10) afin de mesurer la position de rotation.

16. Main robotisée (100) selon l'une des revendications précédentes, **caractérisée en ce que** la main robotisée (100) présente un dispositif de mesure (22) pour mesurer la position de rotation de la deuxième structure articulée (20), le dispositif de mesure (22) étant de préférence conçu pour détecter directement la deuxième structure articulée (20)
afin de mesurer la position de rotation et/ou
afin de la détecter du côté sortie de l'entraînement de la deuxième structure articulée (20).

17. Main robotisée (100) selon l'une des revendications précédentes, **caractérisée en ce que** la main robotisée (100) présente un dispositif de mesure (32) pour mesurer la position de rotation de la troisième structure articulée (30), le dispositif de mesure (32) étant de préférence conçu pour détecter directement la troisième structure articulée (30) afin de mesurer directement la position de rotation, et/ou
afin de la détecter du côté sortie de l'entraînement de la troisième structure articulée (30).

18. Main robotisée (100) selon la revendication 17, **caractérisée en ce que** le dispositif de mesure (32) destiné à mesurer la position de rotation de la troisième structure articulée (30)
est monté sur la deuxième structure articulée (20) et/ou
est relié à la troisième structure articulée (30) par l'intermédiaire d'une structure de couplage (33) de préférence sans jeu et/ou précontrainte.

19. Main robotisée (100) selon l'une des revendications 14 à 18, **caractérisée en ce que** la structure de couplage (13) de la première structure articulée (10) et/ou la structure de couplage (33) de la troisième structure articulée (30)
est rotative et/ou
présente des dents en prise les unes dans les autres et/ou
est réalisée avec des axes parallèles ou angulaires, et/ou
comprend des roues dentées coniques en prise les unes dans les autres.

20. Main robotisée (100) selon l'une des revendications 13 à 19, **caractérisée en ce que** le dispositif de mesure (12) de la première structure articulée (10), le dispositif de mesure (22) de la deuxième structure articulée (20) et/ou le dispositif de mesure (23) de la troisième structure articulée (30) présentent une résolution ayant une tolérance d'erreur de 10 secondes d'arc, de préférence 5 secondes d'arc.

21. Main robotisée (100) selon l'une des revendications précédentes, **caractérisée en ce que** la main robotisée (100) présente une position neutre dans laquelle le premier axe (11) et le troisième axe (31) sont alignés de manière sensiblement coaxiale, la deuxième structure articulée (20) présentant de préférence, à partir de la position neutre,
une plage de rotation supérieure à 120° ou supérieure à 130° vers un côté (S1), et/ou
une plage de rotation supérieure à 1°, supérieure à 80° ou supérieure à 90° vers l'autre côté (S2).

22. Main robotisée (100) selon l'une des revendications précédentes, **caractérisée en ce que**
la première structure articulée (10) présente une plage de rotation autour du premier axe (11) supérieure à +/- 340° ou d'au moins +/- 360°, et/ou
la troisième structure articulée (30) présente une plage de rotation autour du troisième axe (31) supérieure à +/- 340° ou d'au moins +/- 360° ou d'au moins +/- 700°.

23. Main robotisée (100) selon l'une des revendications précédentes, **caractérisée en ce que** le décalage (50) a une longueur de 10 mm minimum et de 100 mm maximum.

24. Main robotisée (100) selon l'une des revendications précédentes, **caractérisée par** un dispositif d'application (60) qui comprend de préférence un dispositif à tête d'impression (61) avec une pluralité de buses pour distribuer un produit d'application sur un composant de carrosserie automobile.

25. Main robotisée (100) selon l'une des revendications précédentes, **caractérisée en ce que** l'au moins une conduite (41)
comprend au moins une conduite de fluide pour l'alimentation en produit d'application et/ou pour l'alimentation en fluide du dispositif d'application (60) et/ou du dispositif à tête d'impression (61), et/ou
au moins une conduite de retour de fluide pour le retour d'un fluide provenant du dispositif d'application (60) et/ou du dispositif à tête d'impression (61), et/ou
au moins un câble pour l'alimentation en énergie et/ou la commande du dispositif d'application (60) et/ou du dispositif à tête d'impression (61).

26. Main robotisée (100) selon l'une des revendications précédentes, **caractérisée en ce que** le passage de conduite (40), de préférence dans la première structure articulée (10) et/ou dans la troisième structure articulée (30), présente une section transversale de passage d'au moins 40 mm à 90 mm maximum, de préférence de 70 mm +/- 5 mm.

27. Robot d'application (200), de préférence robot de peinture, avec une main robotisée (100) selon l'une des revendications précédentes.
